# EUROPEAN PATENT APPLICATION

(11) **EP 4 560 818 A1**
(43) Date of publication of application: **28.05.2025**
(21) Application number: 23889158.4
(22) Date of filing: 08.11.2023
(51) Int. Cl.: H01M 50/451, H01M 50/403, H01M 50/414, H01M 50/446, H01M 50/426, H01M 50/491

(54) **SEPARATOR FOR SECONDARY BATTERY AND METHOD FOR MANUFACTURING SAME**

(30) Priority: 08.11.2022 KR 20220147984
(71) Applicant: LG Chem, Ltd., Yeongdeungpo-gu Seoul 07336 (KR)
(72) Inventor: LEE, Su-Min, Daejeon 34122 (KR); KIM, Sang-Min, Daejeon 34122 (KR); PARK, Hyoun-Gyu, Daejeon 34122 (KR); AHN, Ji-Hye, Daejeon 34122 (KR); CHO, Hae-Yun, Daejeon 34122 (KR); LIM, Mun-Hyuk, Daejeon 34122 (KR)
(74) Representative: Hoffmann Eitle
(86) International application number: PCT/KR2023/017916
(87) International publication number: WO 2024/101900

(57) **Abstract**

A separator for a secondary battery of the present disclosure includes a porous polymer substrate; and a porous coating layer disposed on at least one surface of the porous polymer substrate, wherein the porous coating layer includes inorganic particles, a binder polymer and a dispersant, wherein the binder polymer includes at least three types of fluorine-based polymers, and wherein the dispersant includes a first dispersant and a second dispersant having a lower weight average molecular weight than the first dispersant.

## Description

### TECHNICAL FIELD

The present disclosure relates to a separator for a secondary battery and a method for manufacturing the same. More particularly, the present disclosure relates to a separator of a thin film that includes inorganic particles and has improved bonding strength with electrodes and a method for manufacturing the same.

The present application claims priority to Korean Patent Application No. 10-2022-0147984 filed on November 8, 2022 in the Republic of Korea, the disclosure of which is incorporated herein by reference.

### BACKGROUND ART

With the technological development of, and increasing demand for, mobile devices, the demand for secondary batteries as an energy source is also rapidly growing. Among secondary batteries, lithium secondary batteries are brought to market and being widely used due to high energy density and working potential, long cycle life and low self-discharge rate.

Recently, with the rising interest in environmental issues, many studies are being conducted on electric vehicles (EV) and hybrid electric vehicles (HEV) as an alternative to vehicles using fossil fuels such as gasoline vehicles and diesel vehicles that are regarded as one of the main causes of air pollution. Lithium secondary batteries having high energy density, high discharge voltage and output stability are mainly studied and used as a power source of electric vehicles and hybrid electric vehicles.

Lithium secondary batteries are a stable electrochemical device because a separator insulates a positive electrode from a negative electrode, but heat generation and explosion may occur in the event short circuits occur between the positive electrode and the negative electrode due to faults or defects inside or outside of batteries or impacts, and accordingly ensuring thermal/chemical safety of the separator as an insulator is the most important consideration.

Commercially available polyolefin-based separators widely used in lithium secondary batteries include polyethylene or polypropylene as the main material of porous polymer substrates that prevent electrical short circuits of the positive electrode and the negative electrode and provide pores that act as passages of lithium ions.

The polyolefin-based porous separators generally manufactured through a film stretching process cannot avoid volume changes such as shrinking or melting when the temperature of the batteries rises over 100°C due to internal or external stimuli, and as a consequence, explosions may occur due to electrical shorts between the positive/negative electrodes. Additionally, dendrite growth in the batteries may penetrate the separators, causing internal short circuits and consequential explosions. To suppress the high temperature induced thermal shrinkage and instability of the batteries caused by the dendrite, disclosed are coated separators in which inorganic particles are coated on one or two surfaces of the porous polymer substrates together with binders, to allow the inorganic particles to suppress the shrinkage of the substrates and improve safety on account of porous coating layers.

The porous coating layers include inorganic particles and binder polymers and are introduced to improve durability of the separator substrates (prevent film breakage) or stability in heat resistance (prevent thermal shrinkage). The binder polymers of the separators primarily include polyvinylidene fluoride (PVdF)-based resin. However, the adhesion strength of the PVdF-based resin itself is not high, so it is difficult to ensure a high level of bonding strength. To improve the adhesion strength, the amount of binder polymers or the coating amount may be increased, but the thickness of adhesive layers may increase, resulting in lower energy density and higher resistance.

It is preferred that the adhesive layers of the separators achieve high adhesion strength and high ionic conductivity at small thickness, and to use the batteries stably for a long time, the separators should be chemically and electrochemically stable materials. Accordingly, there is a rising need for the development of separators for secondary batteries that satisfy these requirements.

### SUMMARY

### Technical Problem

According to an aspect, the present disclosure is directed to providing a separator for a secondary battery of a thin film having a coating layer that includes inorganic particles and has improved bonding strength with electrodes.

According to another aspect, the present disclosure is further directed to providing a method for manufacturing the separator for the secondary battery.

It will be readily understood that these and other objectives and advantages of the present disclosure may be realized by the means or methods set forth in the appended claims and a combination thereof.

### Technical Solution

To solve the above-described problem of the present disclosure, there is provided a separator for a secondary battery of the following embodiments and a method for manufacturing the separator for the secondary battery.

According to a first embodiment, there is provided the separator for the secondary battery including a porous polymer substrate; and a porous coating layer disposed on at least one surface of the porous polymer substrate, wherein the porous coating layer includes inorganic particles, a binder polymer and a dispersant, the binder polymer includes at least three types of fluorine-based polymers, and the dispersant includes a first dispersant and a second dispersant having a lower weight average molecular weight than the first dispersant.

According to a second embodiment, in the first embodiment, the weight average molecular weight of the first dispersant may be 100,000 to 500,000, and the weight average molecular weight of the second dispersant may be 1,000 to 20,000.

According to a third embodiment, in the first or second embodiment, a ratio of a weight of the first dispersant to a total weight of the dispersant may be 70 wt% to 90 wt%, and a ratio of a weight of the second dispersant to the total weight of the dispersant may be 10 wt% to 30 wt%.

According to a fourth embodiment, in any one of the first to third embodiments, the first dispersant may include a copolymer containing a cyanoethyl group.

According to a fifth embodiment, in the fourth embodiment, the first dispersant may include at least one selected from the group consisting of cyanoethylpolyvinylalcohol, cyanoethylpullulan, cyanoethylsucrose, cyanoethylcellulose, cyanoethylhydroxyethylcellulose and cyanoethylhydroxypropylcellulose.

According to a sixth embodiment, in any one of the first to fifth embodiments, the second dispersant may include an unsaturated fatty acid-based polymer compound.

According to a seventh embodiment, in the sixth embodiment, the second dispersant may include at least one selected from the group consisting of an unsaturated carboxylic acid polymer, an unsaturated oleic acid polymer, an unsaturated eicosenoic acid polymer, an unsaturated nervonic acid polymer and an unsaturated linoleic acid polymer.

According to an eighth embodiment, in any one of the first to seventh embodiments, the binder polymer may include PVdF-HFP as a first fluorine-based polymer, PVdF-CTFE as a second fluorine-based polymer and at least one of PVdF-TFE and PVdF-HFP-AA as a third fluorine-based polymer.

According to a ninth embodiment, in the eighth embodiment, a weight ratio of the first fluorine-based polymer may be 40 wt% to 80 wt% based on a mixture of the first to third fluorine-based polymers, a weight ratio of the second fluorine-based polymer may be 15 wt% to 40 wt% based on the mixture of the first to third fluorine-based polymers, and a weight ratio of the third fluorine-based polymer may be 1 wt% to 20 wt% based on the mixture of the first to third fluorine-based polymers.

According to a tenth embodiment, in the ninth embodiment, the third fluorine-based polymer may include PVdF-TFE and PVdF-HFP-AA, the weight ratio of the PVdF-TFE may be 3 wt% to 10 wt% based on the mixture of the first to third fluorine-based polymers, and the weight ratio of the PVdF-HFP-AA may be 3 wt% to 10 wt% based on the mixture of the first to third fluorine-based polymers.

According to an eleventh embodiment, in any one of the eighth to tenth embodiments, the PVdF-HFP may satisfy at least one of a viscosity of 3 mPa·s to 8 mPa·s, a Tm of 130°C to 160°C, a weight average molecular weight of 200,000 to 400,000 and a degree of replacement of HFP of 5 mol% to 20 mol%.

According to a twelfth embodiment, in any one of the eighth to eleventh embodiments, the PVdF-CTFE may satisfy at least one of a viscosity of 4 mPa·s to 10 mPa·s, a Tm of 150°C to 180°C, a weight average molecular weight of 200,000 to 400,000 and a degree of replacement of CTFE of 10 mol% to 30 mol%.

According to a thirteenth embodiment, in any one of the eighth to twelfth embodiments, the PVdF-TFE may satisfy at least one of a viscosity of 13 mPa·s to 23 mPa·s, a Tm of 120°C to 150°C, a weight average molecular weight of 1,200,000 to 1,600,000 and a degree of replacement of TFE of 20 mol% to 40 mol%.

According to a fourteenth embodiment, in any one of the eighth to thirteenth embodiments, the PVdF-HFP-AA may satisfy at least one of a viscosity of 15 mPa·s to 25 mPa·s, a Tm of 130°C to 160°C, a weight average molecular weight of 800,000 to 1,200,000 and a degree of replacement of HFP of 1.5 mol% to 5 mol%.

According to a fifteenth embodiment, there is provided the method for manufacturing the separator for the secondary battery, including preparing a first slurry including inorganic particles and a dispersant; preparing a binder solution including a binder polymer and an organic solvent; mixing the first slurry with the binder solution to prepare a second slurry; and coating the second slurry on at least one surface of a porous polymer substrate, wherein the binder polymer includes at least three types of fluorine-based polymers, and the dispersant includes a first dispersant and a second dispersant having a lower weight average molecular weight than the first dispersant.

According to a sixteenth embodiment, in the fifteenth embodiment, the inorganic particles may be present in an amount of 50 wt% to 99 wt% based on a total weight of the binder polymer and the inorganic particles.

According to a seventeenth embodiment, in any one of the fifteenth or sixteenth embodiment, a weight ratio of solids in the second slurry may be 10 wt% to 40 wt%.

According to an eighteenth embodiment, in any one of the fifteenth to seventeenth embodiments, a viscosity of the second slurry may be 4 mPa·s to 10 mPa·s.

According to a nineteenth embodiment, in any one of the fifteenth to eighteenth embodiments, the manufacturing method may further include inducing a vapor induced phase separation of the second slurry coated on the porous polymer substrate at a temperature of 40°C to 60°C and a relative humidity of 50% to 70%; and drying the second slurry subjected to the phase separation at a temperature of 50°C to 70°C and a relative humidity of 0% to 5%.

### Advantageous Effects

The separator for the secondary battery according to the embodiments of the present disclosure has the porous coating layer on at least one surface of the porous polymer substrate, and the porous coating layer includes the inorganic particles, the binder polymer and the dispersant, wherein the binder polymer includes at least three types of fluorine-based polymers and the dispersant includes the first dispersant and the second dispersant.

In an embodiment, the binder polymer may include the first and second fluorine-based polymers having lower viscosity and the third fluorine-based polymer having higher viscosity. The bonding strength between the separator and the electrode may be improved by the binder polymer having lower viscosity. Additionally, the dispersion of the inorganic particles may be reduced by the low viscosity binder polymer, but the reduction in dispersion may be compensated by the binder polymer having higher viscosity.

In an embodiment, the first dispersant may be a high molecular weight dispersant having higher weight average molecular weight, and the second dispersant may be a low molecular weight dispersant having lower weight average molecular weight. It may be possible to achieve high bonding strength of the porous coating layer to the porous polymer substrate by the first dispersant having higher weight average molecular weight. In contrast, when the dispersant includes the first dispersant in a very large amount, due to less dispersion of the inorganic particles, there may be an uncoated, exposed region that is not coated with the porous coating layer, but since the second dispersant has lower weight average molecular weight, the dispersion of the inorganic particles may be improved, and accordingly, an uncoated region may not be formed even though the porous coating layer is coated with a small thickness.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 shows a table that summarizes the measurement results of separators for secondary batteries according to embodiments of the present disclosure.
FIG. 2 shows a table that summarizes the measurement results of separators for secondary batteries according to Comparative Examples of the present disclosure.
FIGs. 3 to 8 are scanning electron microscopy (SEM) images of separators for secondary batteries according to Examples 1 to 6 of FIG. 1, respectively.
FIGs. 9 to 15 are SEM images of separators for secondary batteries according to Comparative Examples 1 to 7 of FIG. 2, respectively.

### DETAILED DESCRIPTION

Hereinafter, the present disclosure will be described in more detail.

It should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The term "comprise", "include" or "have" when used in the present disclosure, specifies the presence of stated elements, but does not preclude the presence or addition of one or more other elements, unless the context clearly indicates otherwise.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

The present disclosure relates to a separator, an electrochemical battery comprising the same and a method for manufacturing the same. **In** the present disclosure, the electrochemical battery may include any battery in which electrochemical reaction occurs. Specific examples of the electrochemical battery may include any type of primary battery, secondary battery, fuel cell, solar cell or capacitor such as super capacitor. **In** particular, the electrochemical battery may be a secondary battery, and the secondary battery may be a lithium ion secondary battery. The lithium ion secondary battery may include, for example, a lithium-metal battery, a lithium-sulfur battery, an all-solid-state battery, a lithium polymer battery and the like, and is preferably a lithium-sulfur battery.

According to an aspect of the present disclosure, there is provided a separator for a secondary battery comprising:
a porous polymer substrate; and
a porous coating layer disposed on at least one surface of the porous polymer substrate,
wherein the porous coating layer includes inorganic particles, a binder polymer and the dispersant,
wherein the binder polymer includes at least three types of fluorine-based polymers, and
wherein the dispersant includes a first dispersant and a second dispersant having a lower weight average molecular weight than the first dispersant.

The porous polymer substrate may electrically insulate a negative electrode from a positive electrode to prevent short circuits and provide movement paths of lithium ions, and is not limited to a particular type and may include any porous polymer substrate commonly used in separators of electrochemical devices. The porous polymer substrate may include, for example, a porous polymer film or a nonwoven fabric including at least one of polymer resins such as polyolefin, polyethyleneterephthalate, polybutyleneterephthalate, polyacetal, polyamide, polycarbonate, polyimide, polyetheretherketone, polyethersulfone, polyphenyleneoxide, polyphenylenesulfide and polyethylenenaphthalene.

In a specific embodiment of the present disclosure, the thickness of the porous polymer substrate may be selected from thicknesses in a range between 5 and 50 µm. The thickness of the porous polymer substrate is not particularly limited to the above-described range, but when the thickness is much smaller than the above-described lower limit, the mechanical properties may reduce and the separator may be easily damaged while battery is in use. On the other hand, the pore size and porosity present in the porous polymer substrate are not limited to particular ranges, but may be 0.01 to 50 µm and 10 to 95%, respectively.

The porous coating layer may be disposed on at least one surface of the porous polymer substrate, and may include the inorganic particles, the binder polymer and the dispersant. The inorganic particles in the porous coating layer may be held and packed together by the binder polymer, and discontinuously dispersed adjacent to each other or in contact with each other by the dispersant. Accordingly, the porous coating layer may have a porous structure from interstitial volume between the inorganic particles. Therefore, the porous coating layer may mitigate high thermal shrinkage of the porous polymer substrate, and besides, provide movement paths of lithium ions due to ion permeability.

In a specific embodiment of the present disclosure, the thickness of the porous coating layer may be properly selected from thicknesses in a range between 0.5 and 20 µm, or 1 and 10 µm, or 1 and 5 µm. The thickness of the porous coating layer is not particularly limited to the above-described range, but the present disclosure may provide the separator that prevents the formation of an uncoated region even when the coating layer is formed with a small thickness and improves adhesion strength and resistance.

The inorganic particles of the porous coating layer are not limited to a particular type and may include any electrochemically stable inorganic particles. Examples of the inorganic particles may include at least one of BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH)₃, SiC and TiO₂.

The binder polymer of the porous coating layer includes at least three types of fluorine-based polymers. The binder polymer may include fluorine-based polymer alone as the binder component, and in an embodiment, the binder polymer may include the first fluorine-based polymer, the second fluorine-based polymer and the third fluorine-based polymer. Alternatively, the binder polymer may comprise the first fluorine-based polymer, the second fluorine-based polymer, and the third fluorine-based polymer as the binder component. The first to third fluorine-based polymers may include polyvinylidene fluoride (PVdF) polymer resin including vinylidene fluoride (VDF) as monomers. Along with the VDF as the monomer, the fluorine-based polymer resin may include a copolymer with a comonomer of at least one of hexafluoropropylene (HFP), chlorotrifluoroethylene (CTFE), hexafluoroisobutylene, perfluorobutyl ethylene, perfluoro propyl vinyl ether (PPVE), perfluoro ethyl vinyl ether (PEVE), perfluoro methyl vinyl ether (PMVE), perfluoro-2,2-dimethyl-1,3-dioxole (PDD) and perfluoro-2-methylene-4-methyl-1,3-dioxolane (PMD).

In an embodiment, the first fluorine-based polymer may be polyvinylidene fluoride-co-hexafluoropropylene (PVdF-HFP). For example, the PVdF-HFP may satisfy at least one of the viscosity of 3 mPa·s to 8 mPa·s, the Tm of 130°C to 160°C, the weight average molecular weight of 200,000 to 400,000 and the degree of replacement of HFP of 5 mol% to 20 mol%.

In an embodiment, the second fluorine-based polymer may be polyvinylidene fluoride-co-chlorotrifluoroethylene (PVdF-CTFE). For example, the PVdF-CTFE may satisfy at least one of the viscosity of 4 mPa·s to 10 mPa·s, the Tm of 150°C to 180°C, the weight average molecular weight of 200,000 to 400,000 and the degree of replacement of CTFE of 10 mol% to 30 mol%.

In an embodiment, the third fluorine-based polymer may include at least one of polyvinylidene fluoride-tetrafluoroethylene (PVdF-TFE) and polyvinylidene fluoride-hexafluoropropylene acrylic acid (PVdF-HFP acrylic acid graft copolymer). For example, the PVdF-TFE may satisfy at least one of the viscosity of 13 mPa·s to 23 mPa·s, the Tm of 120°C to 150°C, the weight average molecular weight of 1,200,000 to 1,600,000 and the degree of replacement of TFE of 20 mol% to 40 mol%. Additionally, the PVdF-HFP-AA may satisfy at least one of the viscosity of 15 mPa·s to 25 mPa·s, the Tm of 130°C to 160°C, the weight average molecular weight of 800,000 to 1,200,000, the degree of replacement of HFP of 1.5 mol% to 5 mol% and the degree of replacement of AA of 0.5 mol% to 1.9 mol%.

At least one of the fluorine-based polymers included in the binder polymer preferably has the viscosity of 10 mPa·s to 15 mPa·s, but the present disclosure is not limited thereto.

In an embodiment, a weight ratio of the first fluorine-based polymer to the mixture of the first to third fluorine-based polymers may be 40 wt% to 80 wt%, a weight ratio of the second fluorine-based polymer to the mixture of the first to third fluorine-based polymers may be 15 wt% to 40 wt%, and a weight ratio of the third fluorine-based polymer to the mixture of the first to third fluorine-based polymers may be 1 wt% to 20 wt%. Here, the third fluorine-based polymer may be any one of PVdF-TFE or PVdF-HFP-AA.

In an embodiment, when the third fluorine-based polymer includes PVdF-TFE and PVdF-HFP-AA, the weight ratio of the PVdF-TFE to the mixture of the first to third fluorine-based polymers may be 3 wt% to 10 wt%, and the weight ratio of the PVdF-HFP-AA to the mixture of the first to third fluorine-based polymers may be 3 wt% to 10 wt%. Additionally, by way of example, the weight ratio of the PVdF-TFE may be equal to the weight ratio of the PVdF-HFP-AA.

The dispersant of the porous coating layer includes the first dispersant and the second dispersant. The second dispersant has lower weight average molecular weight than the first dispersant. Accordingly, the first dispersant may be a high molecular weight dispersant having the weight average molecular weight of 100,000 to 500,000, and the second dispersant may be a low molecular weight dispersant having the weight average molecular weight of 1,000 to 20,000. For example, the weight average molecular weight of the first dispersant may be in a range between 100,000 and 500,000, or between 200,000 and 400,000. The weight average molecular weight of the second dispersant may be in a range between 1,000 and 20,000, between 1,000 and 10,000 or between 1,000 and 5,000.

When the weight average molecular weight of the first dispersant satisfies the above-described range, it may be possible to ensure high bonding strength of the porous coating layer to the porous polymer substrate, and improve the dispersion of the inorganic particles. When the weight average molecular weight of the first dispersant is outside of the above-described range, it may not be beneficial for the thickness and air permeability of the separator, and the resistance rise may be significant. Additionally, when the weight average molecular weight of the second dispersant satisfies the above-described range, it may be possible to improve the dispersion of the inorganic particles in the porous coating layer, and prevent the formation of an uncoated region even when the porous coating layer is coated with a small thickness.

In particular, when the weight average molecular weight of the first dispersant is lower than 100,000, the porous coating layer may be peeled off due to the low adhesion strength between the porous coating layer and the porous polymer substrate. Additionally, when the weight average molecular weight of the first dispersant is higher than 500,000, the dispersion of the inorganic particles may notably reduce.

Meanwhile, in the present disclosure, the weight average molecular weight may be measured through Gel permeation chromatography (GPC). In the present disclosure, the detailed GPC measurement conditions are as follows.

### [GPC measurement conditions]

GPC machine: ACQUITY APC (waters)
Column: PL gel Mixed-B + C (Agilent)
Column temperature: RT (20 to 25°C)
Eluent: DMF/0.05M LiBr
Flow rate: 1.0 ml/min
Detector: Waters 2414 RI detector
Sample concentration: ~1 mg/ml (0.45 um syringe filter)
Injection amount: 10 ul
Curve fitting: PMMA

Meanwhile, in the present disclosure, the viscosity may be measured using a viscometer commonly used in the art. Specific examples of the viscometer may include Brookfile's DVELV or LV DV-II + Pro Viscometer (cone-plate). In a specific embodiment of the present disclosure, the viscosity was measured through Brookfield's LV DV-II + Pro Viscometer (cone-plate) at 25°C after each polymer to be measured was dissolved in acetone at a predetermined concentration, and when measuring, RPM of spindle LV-1(61) may be 100 to 200 rpm, and sample loading volume may be 100 to 250 mL.

Additionally, in the present disclosure, in the fluorine-based polymer, the degree of replacement may be measured through measurements of the amount of functional groups (copolymer monomers) in each polymer, and for example, may be measured by One Dimensional Normal Nuclear Magnetic Resonance Spectroscopy (1D Normal NMR). The measurement method may be performed using Bruker 500 MHz NMR analyzer, and the sample to be measured may be dissolved in DMSO-d6 solvent. For example, the measurement conditions may be set to 1H NMR(zg30), ns=32, d1=3 sec.

Alternatively, the NMR may be measured by Fluorine atomic Nuclear Magnetic Resonance Spectroscopy. The Fluorine atomic Nuclear Magnetic Resonance Spectroscopy will be described in more detail below.

For example, the measurement may be performed using 19F NMR (Bruker DRX-300) analyzer by the following method using CFCl₃ as a reference material. The measurement method starts with dissolving the sample to be measured in deuterated acetone at 8 wt%. The weight average molecular weight is determined through GPC (high temperature PL 220, Waters) equipped with a refractometric detector and two PLgel-10 µm Mixed-B columns (Polymer Laboratory). The mobile phase solvent may contain 0.1 M LiBr and dimethylformamide, and the measurement conditions: 80°C and the flow rate of 1.0 mL/min. The reference sample may be, for example, polystyrene having the weight average molecular weight in a range between 2,000 g/mol and 2,000,000 g/mol.

In another embodiment of the present disclosure, the method through Fluorine atomic Nuclear Magnetic Resonance spectroscopy analysis may use, for example, Unity 400 spectrometer at 376.3 MHz. For example, the spectrum may be obtained in 50°C deuterated dimethyl formamide by excitation pulses at the pulse width of 8.0 microseconds and recirculation delayed by 10 seconds, or in 50°C deuterated dimethyl sulfoxide by excitation pulses at the pulse width of 6.0 microseconds and recirculation delayed by 5 seconds, or in 50°C deuterated acetone by excitation pulses at the pulse width of 8.0 microseconds and recirculation delayed by 20 seconds.

In an embodiment, the first dispersant may include a copolymer containing a cyanoethyl group. Examples of the first dispersant may include at least one of cyanoethylpolyvinylalcohol, cyanoethylpullulan, cyanoethylsucrose, cyanoethylcellulose, cyanoethylhydroxyethylcellulose and cyanoethylhydroxypropylcellulose.

In an embodiment, the second dispersant may include an unsaturated fatty acid-based polymer compound. Examples of the second dispersant may include at least one of an unsaturated carboxylic acid polymer, an unsaturated oleic acid polymer, an unsaturated eicosenoic acid polymer, an unsaturated nervonic acid polymer and an unsaturated linoleic acid polymer.

Since the first dispersant has higher weight average molecular weight, it may be possible to ensure high bonding strength of the porous coating layer to the porous polymer substrate. In contrast, when the dispersant includes the first dispersant in a very large amount, the dispersion of the inorganic particles reduces, forming an uncoated, exposed region that is not coated with the porous coating layer. On the contrary, since the second dispersant has the lower weight average molecular weight, it may be possible to improve the dispersion of the inorganic particles, and prevent the formation of an uncoated region even at the reduced thickness of the porous coating layer.

Accordingly, a ratio of the weight of the first dispersant to the total weight of the dispersant may be 70 wt% to 90 wt%, and a ratio of the weight of the second dispersant to the total weight of the dispersant may be 10 wt% to 30 wt%.

When the weight ratio of the first dispersant and the weight ratio of the second dispersant satisfy the above-described ranges, it may be possible to ensure high bonding strength of the porous coating layer to the porous polymer substrate, improve the dispersion of the inorganic particles, and prevent the formation of an uncoated region.

In contrast, when the weight ratio of the first dispersant is smaller than 70 wt%, the porous coating layer may be peeled off due to the low adhesion strength between the porous coating layer and the porous polymer substrate. Additionally, when the weight ratio of the first dispersant is larger than 90 wt%, an uncoated region may be formed.

When the weight ratio of the second dispersant is smaller than 10 wt%, an uncoated region may be formed due to less dispersion of the inorganic particles. Additionally, when the weight ratio of the second dispersant is larger than 30 wt%, the porous coating layer may be peeled off due to the low adhesion strength between the porous coating layer and the porous polymer substrate.

The separator for the secondary battery of the present disclosure has the porous coating layer on at least one surface of the porous polymer substrate, and the porous coating layer includes the inorganic particles, the binder polymer and the dispersant, wherein the binder polymer includes at least three type of fluorine-based polymers, and the dispersant includes the first dispersant and the second dispersant.

In an embodiment, each of the first fluorine-based polymer and the second fluorine-based polymer may be PVdF-HFP and PVdF-CTFE having lower viscosity, respectively, and the third fluorine-based polymer may be PVdF-TFE and/or PVDF-HFP-AA having higher viscosity. The bonding strength between the separator and the electrode may be improved by the binder polymer having lower viscosity. Additionally, the dispersion of the inorganic particles may be reduced by the low viscosity binder polymer, but the reduction in dispersion may be compensated by the binder polymer having higher viscosity.

In an embodiment, the first dispersant may be a high molecular weight dispersant having higher weight average molecular weight, for example, a copolymer containing a cyanoethyl group, and the second dispersant may be an unsaturated fatty acid-based polymer compound having lower weight average molecular weight. It may be possible to ensure high bonding strength of the porous coating layer to the porous polymer substrate by the first dispersant having higher weight average molecular weight. In contrast, when the dispersant includes the first dispersant in a very large amount, the dispersion of the inorganic particles reduces, forming an uncoated, exposed region that is not coated with the porous coating layer. Since the second dispersant has lower weight average molecular weight, it may be possible to improve the dispersion of the inorganic particles, thereby preventing the formation of an uncoated region even when the porous coating layer is formed with a small thickness.

Hereinafter, a method for manufacturing the separator for the secondary battery will be described.

According to an aspect of the present disclosure, there is provided the method for manufacturing the separator for the secondary battery, comprising:
preparing a first slurry including inorganic particles and a dispersant;
preparing a binder solution including a binder polymer and an organic solvent;
mixing the first slurry with the binder solution to prepare a second slurry; and
coating the second slurry on at least one surface of a porous polymer substrate,
wherein the binder polymer includes at least three types of fluorine-based polymers, and
wherein the dispersant includes a first dispersant and a second dispersant having lower weight average molecular weight than the first dispersant.

Additionally, in an embodiment, the manufacturing method may further include inducing phase separation of the second slurry coated on the porous polymer substrate at the temperature of 40°C to 60°C and the relative humidity of 50% to 70%; and
drying the second slurry subjected to the phase separation at the temperature of 50°C to 70°C and the relative humidity of 0% to 5%.

The first slurry may be prepared by mixing and dispersing the organic solvent, the inorganic particles, and the dispersant.

The organic solvent may include cyclic aliphatic hydrocarbons such as cyclopentane, cyclohexane; aromatic hydrocarbons such as toluene, xylene, ethylbenzene, ketones such as acetone, ethylmethylketone, diisopropylketone, cyclohexanone, methylcyclohexane, ethylcyclohexane; chlorinated aliphatic hydrocarbon such as methylenechloride, chloroform, tetrachlorocarbon; esters such as ethyl acetate, butyl acetate, γ-butyrolactone, ε-caprolactone; nitriles such as acetonitrile, propionitrile; ethers such as tetrahydrofuran, ethyleneglycoldiethylether; alcohols such as methanol, ethanol, isopropanol, ethyleneglycol, ethyleneglycolmonomethylether; and amides such as N-methylpyrrolidone, N,N-dimethylformamide, and according to a specific embodiment of the present disclosure, the organic solvent may include acetone in view of advantages of the drying process.

These solvents may be used singly or in combination. Especially some of them having low boiling point and high volatility are preferred because they can be removed at low temperature in a short time. Specifically, the solvent may preferably include acetone, toluene, cyclohexanone, cyclopentane, tetrahydrofuran, cyclohexane, xylene, N-methylpyrrolidone, or a mixture thereof.

The inorganic particles and the dispersant may include the above-described materials.

The binder solution may be prepared by mixing the binder polymer with the organic solvent, the binder polymer may include the first to third fluorine-based polymers, and the organic solvent may include the above-described solvent, and preferably acetone.

The second slurry may be prepared by adding the binder solution to the first slurry, and milling and dispersing the inorganic particles while controlling the average particle size to a predetermined level using a ball milling method.

In this instance, the inorganic particles may be present in an amount of 50 wt% to 99 wt% based on the total weight of the binder polymer and the inorganic particles, and the weight ratio of solids in the second slurry may be 10 wt% to 40 wt%. Additionally, the viscosity of the second slurry may be 4 mPa·s to 10 mPa·s.

The prepared second slurry was coated one or two surfaces of the porous polymer substrate to form the porous coating layer. A method for coating the second slurry is not limited to a particular method, and may include a dip coating method, a die coating method, a roll coating method, a comma coating method, a doctor blade coating method, a reverse roll coating method, a direct roll coating method and the like.

The coating process for forming the porous coating layer is preferably performed in a predetermined range of humidity. After coating a composition for forming the porous coating layer on one or two surfaces of the porous polymer substrate, through the drying process, the binder dissolved in the coating layer (the composition) has phase transition characteristics by phase separation (vapor-induced phase separation) known in the art. The phase separation may be performed by wet phase separation or immersion phase separation.

The wet phase separation will be described below.

First, for the phase separation, a nonsolvent may be introduced in a gas state. The nonsolvent is not limited to a particular type and may include any nonsolvent that does not dissolve the binder and is partially compatible with the solvent. The nonsolvent may be, for example, at least one selected from the group consisting of water, methanol, ethanol, isopropanol and butanol.

When the nonsolvent in gas state is introduced and added, the phase separation may be performed using a small amount of nonsolvent, and it is easier to dry the inorganic composition.

In this instance, the temperature at which the nonsolvent in gas state is added may range between 15°C and 70°C, and when the temperature is lower than 15°C, the nonsolvent is not kept in gas state and the inorganic composition gets dried slowly, resulting in low productivity, and when the temperature is higher than 70°C, the solvent and the nonsolvent get dried very fast, resulting in inadequate phase separation.

Additionally, in the phase separation process, adding the nonsolvent so that the vapor pressure of the nonsolvent is 15% to 80% or 30% to 50% of the saturated vapor pressure and performing phase separation may be performed in a sequential order. When the vapor pressure of the nonsolvent is lower than 15% of the saturated vapor pressure, adequate phase separation fails due to a very small amount of nonsolvent, and when the vapor pressure of the nonsolvent is higher than 80% of the saturated vapor pressure, the phase separation is overly done, making it difficult to obtain uniform coating.

To induce the phase separation with an addition of the nonsolvent in gas state, it is preferred to use the solvent having low boiling point because it easily evaporates. That is, when the solvent evaporates, the temperature is lowered, the nonsolvent in gas state becomes condensed, which makes it easy to exchange with the solvent. In a specific example, when the nonsolvent in gas state is added, the boiling point of the solvent may be in a range between 30°C and 80°C. Additionally, the solvent of the inorganic composition containing the nonsolvent in gas state may be, for example, at least one selected from the group consisting of acetone and methylethylketone.

Next, the immersion phase separation will be described below.

The composition for forming the porous coating layer is coated on at least one surface of the porous polymer substrate, and then immersed in a coagulation solution including a suitable nonsolvent for a predetermined time. This induces phase separation of the coated composition for forming the porous coating layer and solidification of the binder resin. In this process, pores are formed in the coating layer including the binder resin and the inorganic particles. Subsequently, washing is performed to remove the coagulation solution, followed by drying to integrally form the porous coating layer on the porous polymer substrate.

The solvent used to dissolve the binder may include any solvent that dissolves the binder resin at a concentration of 5 wt% or more, preferably 15 wt% or more, and more preferably 25 wt% or more in the condition of 25°C. Non-limiting examples of the solvent may include a polar amide solvent such as N-methylpyrrolidone, dimethylacetamide, dimethylformamide, propanone, cyclopentanone, methylacetate, gamma-butyrolactone, trimethylphosphate, triethylphosphate and dimethylethoxymethane. When the solubility of the binder resin in the solvent is less than the above-described range, the phase separation may be overly done.

The nonsolvent may include any nonsolvent having the binder resin solubility of less than 5 wt% in the condition of 25°C. The nonsolvent may include at least one selected from water, methanol, ethanol, propylalcohol, butylalcohol, butanediol, ethyleneglycol, propyleneglycol, and tripropyleneglycol.

The coagulation solution may include the nonsolvent alone or in combination with the above-described solvent. When the mixed solvent of the nonsolvent and the solvent is used, the amount of the nonsolvent is 95 wt% or more based on 100 wt% of the coagulation solution to form a good porous structure and improve productivity.

The separator for the secondary battery of the present disclosure may be dried after the phase separation. Specifically, the second slurry subjected to the phase separation may be dried at the temperature of 50°C to 70°C and the relative humidity of 0% to 5%, or the temperature of 50°C to 70°C and the relative humidity of 0%. The drying may be performed using a method known in the art, and may be performed by a batch or continuous process using an oven or a heating chamber in the temperature range considering the vapor pressure of the solvent used. The drying is performed to remove the solvent present in the composition, and is preferably performed as soon as possible in view of productivity.

Hereinafter, examples will be described to help the understanding of the present disclosure. However, the examples according to the present disclosure may be modified into many different forms, and the scope of the present disclosure should not be interpreted as being limited to the following examples. The examples of the present disclosure are provided to explain the present disclosure to persons having ordinary skill in the technical field pertaining to the present disclosure completely and thoroughly.

### Example 1

### First slurry

400g of acetone as an organic solvent, 130g of Al₂O₃ (Korea Ceramics, ALK-S1) as inorganic particles, 3g of cyanoethylpolyvinylalcohol (Echo Chemical Co. Ltd., CEPV-157, weight average molecular weight 263,000) as a first dispersant, and 0.6g of unsaturated carboxylic acid polymer (BYK, P-105, weight average molecular weight 1,500) as a second dispersant were mixed and dispersed to prepare a first slurry.

### Binder solution

400g of acetone as an organic solvent, 36g of PVdF-HFP (Solvay, Solef 20808) as a first fluorine-based polymer, 15g of PVdF-CTFE (Solvay, Solef 32008) as a second fluorine-based polymer, and 3g of PVdF-TFE (Daikin) as a third fluorine-based polymer were mixed to prepare a binder solution.

The PVdF-HFP has the viscosity of 3.42 mPa·s, Tm of 151°C, the weight average molecular weight of 300,000, and the degree of replacement of HFP of 8 mol%, and the PVdF-CTFE has the viscosity of 5.34 mPa·s, the Tm of 166°C, the weight average molecular weight of 300,000 and the degree of replacement of CTFE of 20 mol%, and the PVdF-TFE has the viscosity of 18.69 mPa·s, the Tm of 135°C, the weight average molecular weight of 140,000 and the degree of replacement of TFE of 31 mol%.

### Second slurry

The binder solution was added to the first slurry, and the inorganic particles were milled and dispersed while controlling the average particle size to a predetermined level using a ball milling method to prepare a second slurry. The second slurry had a weight ratio of the organic solvent to the solids of 4:1 and the solids content of 20 wt%. A weight ratio of the binder polymer to the inorganic particles in the solids was 1:4, and a ratio of the weight of the inorganic particles to the total weight of the binder polymer and the inorganic particles was 80 wt%. The viscosity of the second slurry was 7.32 mPa·s.

### Separator for secondary battery

The second slurry was coated on a polyolefin-based substrate (Toray, thickness 9 µm, air permeation time 70 s/100 cc, resistance 0.50 ohm, porosity 45 vol%) as a porous polymer substrate by a microgravure method. Subsequently, phase transition was carried out by inducing vapor induced phase separation of the second slurry coated on the porous polymer substrate at the temperature 60°C and the relative humidity 60% for 15 seconds and dried at the temperature 60°C and the relative humidity 0% to prepare a separator for a secondary battery.

### Example 2

A separator was prepared by the same method as Example 1, except that 400g of acetone as an organic solvent, 34g of PVdF-HFP (Solvay, Solef 20808) as a first fluorine-based polymer, 14g of PVdF-CTFE (Solvay, Solef 32008) as a second fluorine-based polymer and 6g of PVdF-TFE (Daikin) as a third fluorine-based polymer were mixed to prepare a binder solution having the viscosity of 8.58 mPa·s.

### Example 3

A separator was prepared by the same method as Example 1, except that 400g of acetone as an organic solvent, 36g of PVdF-HFP (Solvay, Solef 20808) as a first fluorine-based polymer, 15g of PVdF-CTFE (Solvay, Solef 32008) as a second fluorine-based polymer and 3g of PVdF-HFP-AA (Solvay, Solef 75130) as a third fluorine-based polymer were mixed to prepare a binder solution having the viscosity of 7.41 mPa·s. The PVdF-HFP-AA has the viscosity of 19.22 mPa·s, the Tm of 145°C, the weight average molecular weight of 1,000,000 and the degree of replacement of HFP of 2.3 mol%.

### Example 4

A separator was prepared by the same method as Example 1, except that 400g of acetone as an organic solvent, 34g of PVdF-HFP (Solvay, Solef 20808) as a first fluorine-based polymer, 14g of PVdF-CTFE (Solvay, Solef 32008) as a second fluorine-based polymer and 6g of PVdF-HFP-AA (Solvay, Solef 75130) as a third fluorine-based polymer were mixed to prepare a binder solution having the viscosity of 9.01 mPa·s. The PVdF-HFP-AA has the viscosity of 19.22 mPa·s, the Tm of 145°C, the weight average molecular weight of 1,000,000 and the degree of replacement of HFP of 2.3 mol%.

### Example 5

A separator was prepared by the same method as Example 1, except that 400g of acetone as an organic solvent, 34g of PVdF-HFP (Solvay, Solef 20808) as a first fluorine-based polymer, 14g of PVdF-CTFE (Solvay, Solef 32008) as a second fluorine-based polymer and 3g of PVdF-TFE (Daikin) and 3g of PVdF-HFP-AA (Solvay, Solef 75130) as a third fluorine-based polymer were mixed to prepare a binder solution having the viscosity of 8.741 mPa·s. The PVdF-HFP-AA has the viscosity of 19.22 mPa·s, the Tm of 145°C, the weight average molecular weight of 1,000,000 and the degree of replacement of HFP of 2.3 mol%.

### Example 6

A separator was prepared by the same method as Example 1, except that 400g of acetone as an organic solvent, 130g of Al₂O₃ (Korea Ceramics, ALK-S1) as inorganic particles, 3g of cyanoethylpolyvinylalcohol (Echo Chemical Co., Ltd., CEPV-208, weight average molecular weight 364,000) as a first dispersant and 0.6g of unsaturated carboxylic acid polymer (BYK, P-105, weight average molecular weight 1,500) as a second dispersant were mixed and dispersed to prepare a first slurry.

### Comparative Example 1

A separator was prepared by the same method as Example 1, except that 400g of acetone as an organic solvent and 38g of PVdF-HFP (Solvay, Solef 20808) and 16g of PVdF-CTFE (Solvay, Solef 32008) as a fluorine-based polymer were mixed to prepare a binder solution.

### Comparative Example 2

A separator was prepared by the same method as Example 1, except that 400g of acetone as an organic solvent and 27g of PVdF-HFP (Solvay, Solef 20808) and 27g of PVdF-CTFE (Solvay, Solef 32008) as a fluorine-based polymer were mixed to prepare a binder solution.

### Comparative Example 3

A separator was prepared by the same method as Example 1, except that 400g of acetone as an organic solvent, and 16g of PVdF-HFP (Solvay, Solef 20808) and 38g of PVdF-CTFE (Solvay, Solef 32008) as a fluorine-based polymer were mixed to prepare a binder solution.

### Comparative Example 4

A separator was prepared by the same method as Example 1, except that a binder solution was prepared using 400g of acetone as an organic solvent and 54g of PVdF-TFE (Daikin) as a fluorine-based polymer.

### Comparative Example 5

A separator was prepared by the same method as Example 1, except that a binder solution was prepared using 400g of acetone as an organic solvent and 54g of PVDF-HTP-AA (Solvay, Solef 75130) as a fluorine-based polymer.

### Comparative Example 6

A separator was prepared by the same method as Example 1, except that 400g of acetone as an organic solvent, 130g of Al₂O₃ (Korea Ceramics, ALK-S1) as inorganic particles and 3g of cyanoethylpolyvinylalcohol (Echo Chemical Co., Ltd., CEPV-157) as a dispersant were mixed and dispersed to prepare a first slurry.

### Comparative Example 7

A separator was prepared by the same method as Example 1, except that 400g of acetone as an organic solvent, 130g of Al₂O₃ (Korea Ceramic, ALK-S1) as inorganic particles and 2g of unsaturated carboxylic acid polymer (BYK, P-105) as a dispersant were mixed and dispersed to prepare a first slurry.

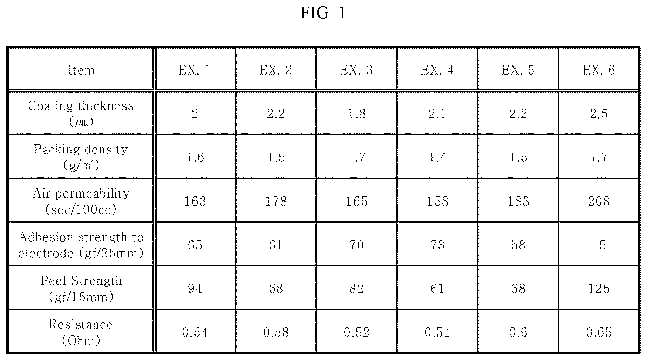

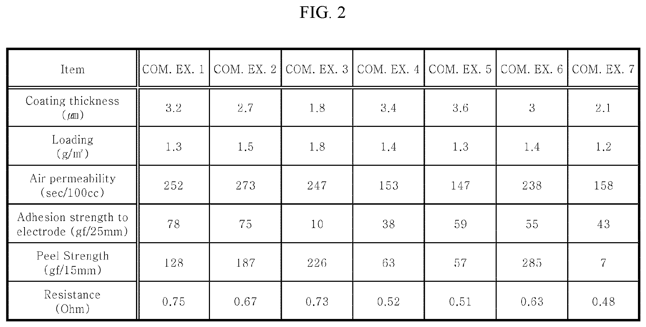

FIGs. 1 and 2 show the measurement results of Examples 1 to 6 and Comparative Examples 1 to 7, respectively.

The air permeability of the separator was measured using a Gurley air permeability tester in accordance with JIS P-8117. In this instance, the time required for air of 100 cc to pass through the diameter of 28.6 mm and the area of 645 mm² of the separator was measured.

The separator-electrode adhesion strength was measured by tailoring the separator into a size of 25 mm X 70 mm, stacking it with the electrode, interposing between 2 sheets of A4 papers and adhering using a flat plate press. In this instance, hot pressing was performed in the conditions of the flat plate press of the temperature of 60°C, the pressure of 1000 kgf and 1 second. Subsequently, when applying a force 180° at the measurement speed of 300 mm/min using UTM machine (LLOYD instrument LF plus), a force required to peel the porous coating layer opposite the electrode off from the electrode was measured.

The resistance was a resistance value when the separator was cut and placed in a Hoshen 2032 coin cell and immersed in an electrolyte solution, and was measured using 1M LiPF₆-ethylene carbonate/ethylmethyl carbonate (a weight ratio 3:7) electrolyte solution using EIS (Electrochemical Impedance Spectroscopy) at 25°C by an alternating current method.

As shown in FIGs. 1 and 2, the separators of Examples 1 to 6 had the coating layer of 2.5 um or less in thickness when measured, and it was confirmed that the separators of thinner films than Comparative Examples were achieved. Additionally, when comparing the packing density, the air permeability, the separator-electrode adhesion strength, the peel strength and the resistance between the separators of Examples 1 to 6 and Comparative Examples, the separators of Examples were superior to Comparative Examples.

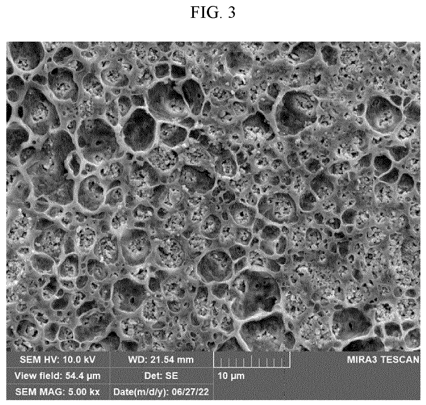

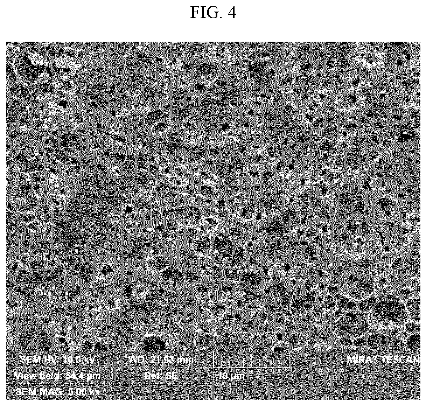

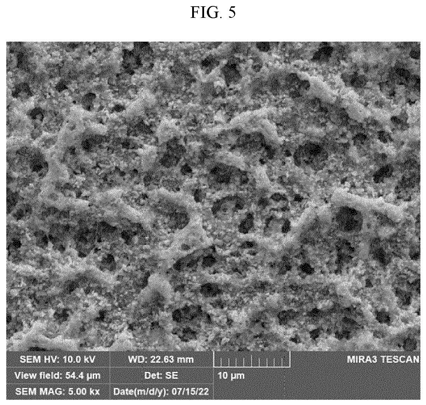

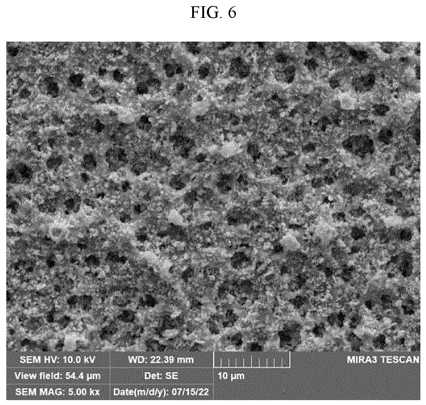

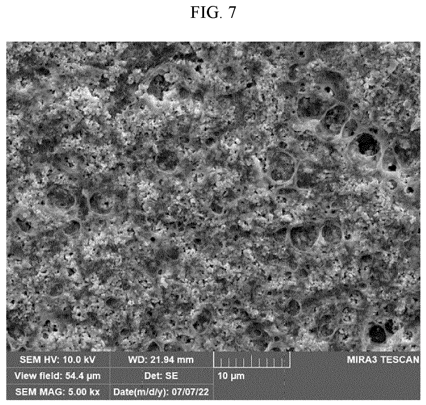

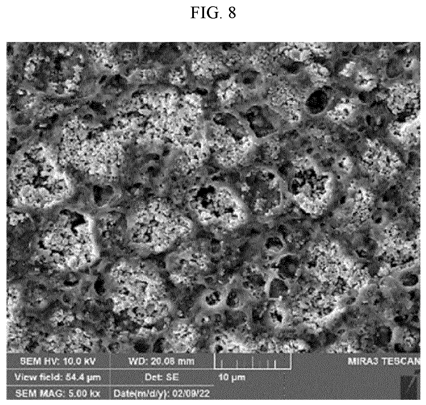

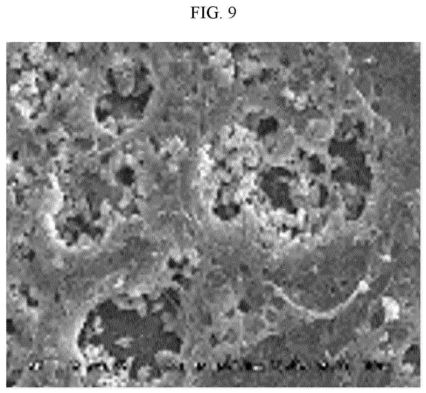

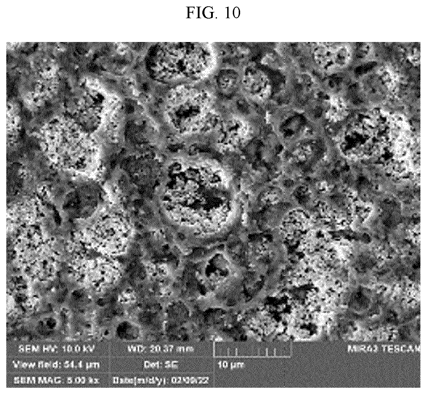

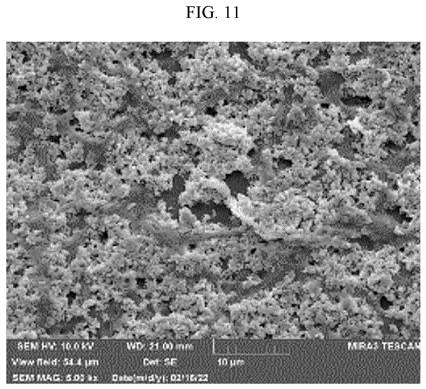

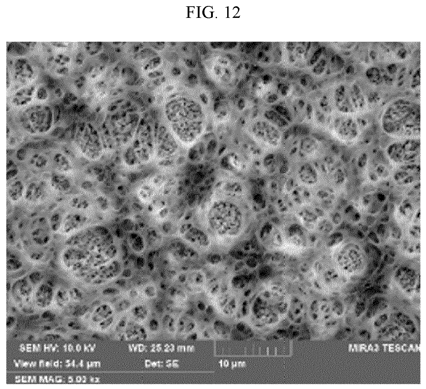

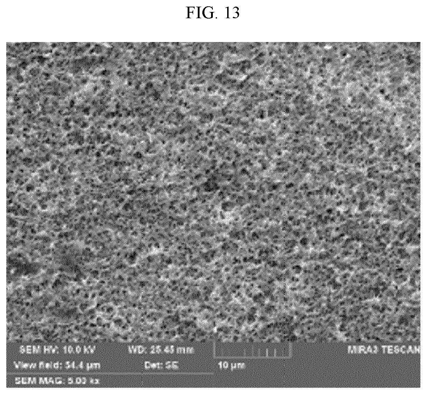

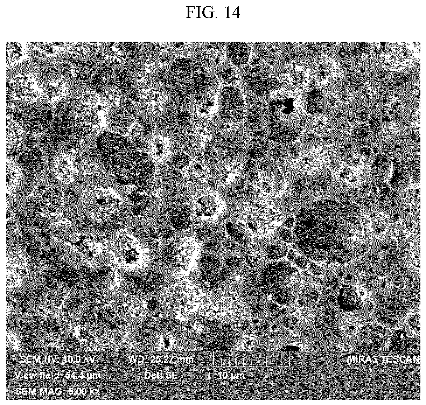

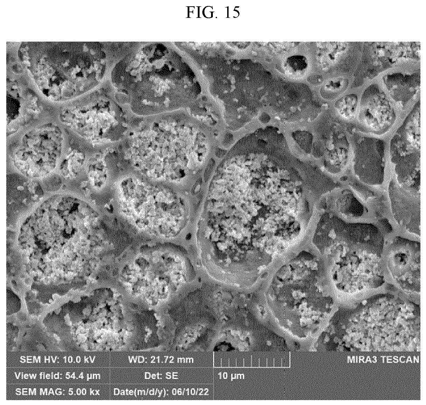

FIGs. 3 to 8 show scanning electron microscopy (SEM) images of the separators for the secondary batteries according to Examples 1 to 6, and FIGs. 9 to 15 show SEM images of the separators for the secondary batteries according to Comparative Examples 1 to 7, respectively.

As a result of observing the SEM images of FIGs. 3 to 8, compared to Comparative Examples, little or no uncoated region was observed. In particular, in FIG. 3, the thin binder layer is black in color, showing that it is fully coated.

In contrast, in the case of Comparative Examples 1, 2, 4, 5 and 6, the coating layer was too thick, failing to achieve the separators of thin films, in the case of Comparative Examples 3 and 7, the thickness of the coating layer was proper, but the separator-electrode adhesion strength measured in Comparative Example 3 was too low, and the peel strength measured in Comparative Example 7 was too low. Additionally, in FIGs. 9 to 14, the surfaces of the separators having void spaces were observed due to agglomeration of white alumina on the surfaces, confirming the presence of uncoated regions.

The weight average molecular weight was measured through GPC, and the GPC measurement conditions are as follows.

### [GPC measurement condition]

GPC machine: ACQUITY APC (waters)
Column: PL gel Mixed-B + C (Agilent)
Column temperature: RT (20 to 25°C)
Eluent: DMF/0.05M LiBr
Flow rate: 1.0 ml/min
Detector: Waters 2414 RI detector
Sample concentration: ~1 mg/ml (0.45 um syringe filter)
Injection amount: 10 ul
Curve fitting: PMMA

The viscosity was measured using Brookfile LV DV-II + Pro Viscometer (cone-plate). After dissolving each polymer to be measured in acetone at a predetermined concentration, measurements were performed at 25°C through the device, and when measuring, RPM of spindle LV-1(61) was 100 to 200 rpm, and sample loading volume was 100 to 250 mL.

The degree of replacement was measured by 1D Normal NMR. The measurements were performed using Bruker 500 MHz NMR analyzer, and about 10 mg of the sample was dissolved in about 0.5 ml of DMSO-d6 at 50°C. The measurement conditions were 1H NMR(zg30), ns=32, d1=3 sec.

## Claims

1. A separator for a secondary battery, comprising:
a porous polymer substrate; and
a porous coating layer disposed on at least one surface of the porous polymer substrate,
wherein the porous coating layer includes inorganic particles, a binder polymer and a dispersant,
wherein the binder polymer includes at least three types of fluorine-based polymers, and
wherein the dispersant includes a first dispersant and a second dispersant having a lower weight average molecular weight than the first dispersant.

2. The separator for the secondary battery according to claim 1, wherein the weight average molecular weight of the first dispersant is 100,000 to 500,000, and
wherein the weight average molecular weight of the second dispersant is 1,000 to 20,000.

3. The separator for the secondary battery according to claim 1, wherein a ratio of a weight of the first dispersant to a total weight of the dispersant is 70 wt% to 90 wt%, and
wherein a ratio of a weight of the second dispersant to the total weight of the dispersant is 10 wt% to 30 wt%.

4. The separator for the secondary battery according to claim 1, wherein the first dispersant includes a copolymer containing a cyanoethyl group.

5. The separator for the secondary battery according to claim 4, wherein the first dispersant includes at least one selected from the group consisting of cyanoethylpolyvinylalcohol, cyanoethylpullulan, cyanoethylsucrose, cyanoethylcellulose, cyanoethylhydroxyethylcellulose and cyanoethylhydroxypropylcellulose.

6. The separator for the secondary battery according to claim 1, wherein the second dispersant includes an unsaturated fatty acid-based polymer compound.

7. The separator for the secondary battery according to claim 6, wherein the second dispersant includes at least one selected from the group consisting of an unsaturated carboxylic acid polymer, an unsaturated oleic acid polymer, an unsaturated eicosenoic acid polymer, an unsaturated nervonic acid polymer and an unsaturated linoleic acid polymer.

8. The separator for the secondary battery according to claim 1, wherein the binder polymer includes PVdF-HFP as a first fluorine-based polymer, PVdF-CTFE as a second fluorine-based polymer, and at least one of PVdF-TFE and PVdF-HFP-AA as a third fluorine-based polymer.

9. The separator for the secondary battery according to claim 8, wherein a weight ratio of the first fluorine-based polymer is 40 wt% to 80 wt% based on a mixture of the first to third fluorine-based polymers,
wherein a weight ratio of the second fluorine-based polymer is 15 wt% to 40 wt% based on the mixture of the first to third fluorine-based polymers, and
wherein a weight ratio of the third fluorine-based polymer is 1 wt% to 20 wt% based on the mixture of the first to third fluorine-based polymers.

10. The separator for the secondary battery according to claim 9, wherein the third fluorine-based polymer includes PVdF-TFE and PVdF-HFP-AA,
wherein the weight ratio of the PVdF-TFE is 3 wt% to 10 wt% based on the mixture of the first to third fluorine-based polymers, and
wherein the weight ratio of the PVdF-HFP-AA is 3 wt% to 10 wt% based on the mixture of the first to third fluorine-based polymers.

11. The separator for the secondary battery according to claim 8, wherein the PVdF-HFP satisfies at least one of a viscosity of 3 mPa·s to 8 mPa·s, a Tm of 130°C to 160°C, a weight average molecular weight of 200,000 to 400,000 and a degree of replacement of HFP of 5 mol% to 20 mol%.

12. The separator for the secondary battery according to claim 8, wherein the PVdF-CTFE satisfies at least one of a viscosity of 4 mPa·s to 10 mPa·s, a Tm of 150°C to 180°C, a weight average molecular weight of 200,000 to 400,000 and a degree of replacement of CTFE of 10 mol% to 30 mol%.

13. The separator for the secondary battery according to claim 8, wherein the PVdF-TFE satisfies at least one of a viscosity of 13 mPa·s to 23 mPa·s, a Tm of 120°C to 150°C, a weight average molecular weight of 1,200,000 to 1,600,000 and a degree of replacement of TFE of 20 mol% to 40 mol%.

14. The separator for the secondary battery according to claim 8, wherein the PVdF-HFP-AA satisfies at least one of a viscosity of 15 mPa·s to 25 mPa·s, a Tm of 130°C to 160°C, a weight average molecular weight of 800,000 to 1,200,000 and a degree of replacement of HFP of 1.5 mol% to 5 mol%.

15. A method for manufacturing a separator for a secondary battery, comprising:
preparing a first slurry including inorganic particles and a dispersant;
preparing a binder solution including a binder polymer and an organic solvent;
mixing the first slurry with the binder solution to prepare a second slurry; and
coating the second slurry on at least one surface of a porous polymer substrate,
wherein the binder polymer includes at least three types of fluorine-based polymers, and
wherein the dispersant includes a first dispersant and a second dispersant having a lower weight average molecular weight than the first dispersant.

16. The method for manufacturing the separator for the secondary battery according to claim 15, wherein the inorganic particles are present in an amount of 50 wt% to 99 wt% based on a total weight of the binder polymer and the inorganic particles.

17. The method for manufacturing the separator for the secondary battery according to claim 15, wherein a weight ratio of solids in the second slurry is 10 wt% to 40 wt%.

18. The method for manufacturing the separator for the secondary battery according to claim 15, wherein a viscosity of the second slurry is 4 mPa·s to 10 mPa·s.

19. The method for manufacturing the separator for the secondary battery according to claim 15, further comprising:
inducing a vapor induced phase separation of the second slurry coated on the porous polymer substrate at a temperature of 40°C to 60°C and a relative humidity of 50% to 70%; and
drying the second slurry subjected to the phase separation at a temperature of 50°C to 70°C and a relative humidity of 0% to 5%.
